# EUROPEAN PATENT APPLICATION

(11) **EP 4 607 326 A1**
(43) Date of publication of application: **27.08.2025**
(21) Application number: 23878973.9
(22) Date of filing: 08.10.2023
(51) Int. Cl.: G06F 3/04817, G06F 3/04845

(54) **METHOD AND APPARATUS FOR SPECIAL EFFECT INTERACTION, DEVICE, AND STORAGE MEDIUM**

(30) Priority: 18.10.2022 CN 202211275938
(71) Applicant: Beijing Zitiao Network Technology Co., Ltd., Beijing 100190 (CN)
(72) Inventor: WANG, Yaozheng, Beijing 100028 (CN)
(74) Representative: Marks & Clerk LLP
(86) International application number: PCT/CN2023/123449
(87) International publication number: WO 2024/082981

(57) **Abstract**

According to the embodiments of the disclosure, a method, an apparatus, a device, and a storage medium for effect interaction are provided. The method includes: displaying an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content; receiving a first predetermined operation for a target control in the group of effect controls; and switching the target control to display second visual information of a target effect corresponding to the target control, wherein the second visual information comprises dynamic visual information for indicating an operation specification and/or an effect preview of the target effect. In this way, the effect control can be used to display the dynamic visual information for the target effect in the embodiments of the disclosure, so that a user may know the effect or operation specification of the target effect more conveniently.

## Description

The present application claims priority to Chinese Patent Application No. 202211275938.5, filed on Oct. 18, 2022, and entitled "METHOD, APPARATUS, DEVICE, AND STORAGE MEDIUM OF EFFECT INTERACTION", the entirety of which is incorporated herein by reference.

### FIELD

Example embodiments of the present disclosure generally relate to the field of computers, and in particular, to a method, an apparatus, a device, and a computer-readable storage medium of effect interaction.

### BACKGROUND

With the development of the Internet, people increasingly utilize the Internet to share various User Generated Data (UGC). For example, people may use a short video platform to share created short video content, or utilize a live streaming platform to provide live video.

In such a content-creating process, it is desirable to be able to create more personalized content. Thus, a variety of effects are provided to enrich users to create more fun and personalized content. Such effects may include, for example, a filter or a dynamic effect applied to picture content, video content, or a video stream.

### SUMMARY

In a first aspect of the present disclosure, a method of effect interaction is provided. The method comprises: displaying an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content; receiving a first predetermined operation for a target control in the group of effect controls; and switching the target control to display second visual information of a target effect corresponding to the target control, wherein the second visual information comprises dynamic visual information for indicating an operation specification and/or an effect preview of the target effect.

In a second aspect of the present disclosure, an apparatus for effect interaction is provided. The apparatus comprises: a display module configured to display an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content; a receiving module configured to receive a first predetermined operation for a target control in the group of effect controls; and a switching module configured to switch the target control to display second visual information of a target effect corresponding to the target control, wherein the second visual information comprises dynamic visual information for indicating an operation specification and/or an effect preview of the target effect.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The medium stores a computer program, which when executed by a processor, performs the method of the first aspect.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in combination with the accompanying drawings. In the drawings, the same or similar reference numbers refer to the same or similar elements, wherein:
FIG. 1 illustrates an example effect interaction interface according to a conventional approach;
FIG. 2A to FIG. 2C illustrate schematic diagrams of a process of interacting with an effect interaction interface according to some embodiments of the present disclosure;
FIG. 3A to FIG. 3C illustrate schematic diagrams of a process of interacting with an effect interaction interface according to some other embodiments of the present disclosure;
FIG. 4 illustrates a flowchart of an example process of effect interaction according to some embodiments of the present disclosure;
FIG. 5 illustrates a block diagram of an apparatus for effect interaction according to some embodiments of the present disclosure; and
FIG. 6 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms "including", "comprising" and the like should be understood to include "including but not limited to" and "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

As discussed above, it is desirable to utilize an effect to create more interesting or more personalized content. Such content may include, for example, a picture, a video, a live video stream, or the like. In the present disclosure, the "effect" may, for example, indicate a visual effect applied to multimedia content such as a picture, a video, or a live video stream, for example, various filters or dynamic effects.

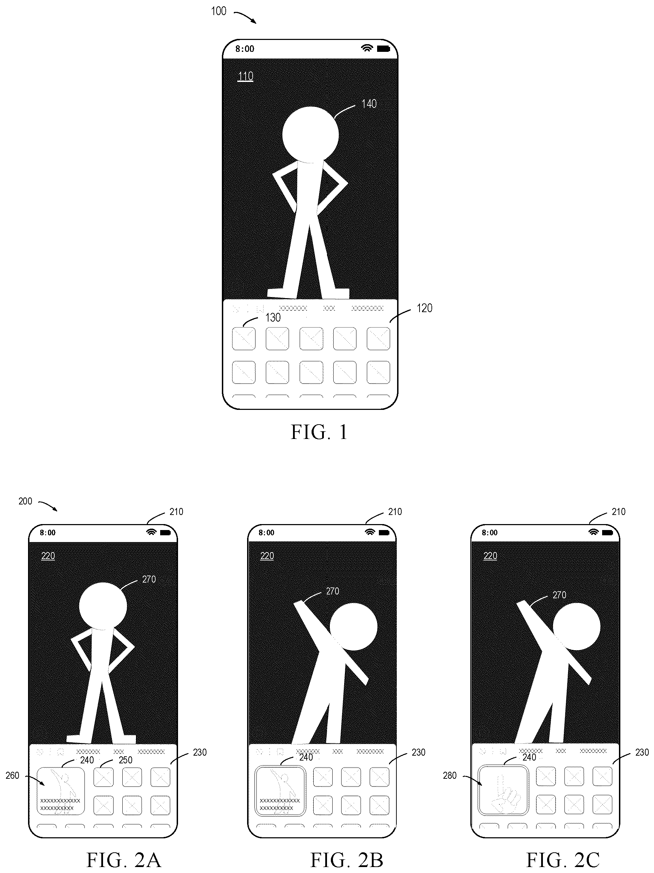

FIG. 1 illustrates an example effect interaction interface 100 according to a conventional approach. As shown in FIG. 1, an electronic device (for example, a mobile terminal) may display the effect interaction interface 100. As shown in FIG. 1, the effect interaction interface 100 may include, for example, a content area 110 and a control area 120.

The control area 120 may include, for example, a group of selectable effect controls 130, which may correspond to different effects. After a user selects a specific effect control 130, the corresponding effect may be applied to a target content 140 to be edited, and a preview related to the effect being applied to the target content 140 is displayed in the content area 110.

Conventionally, the effect control 130 is generally only capable of providing static image information, for example, an icon, related to a corresponding effect. However, such static image information can provide a user with limited help, and it is difficult for the user to understand the interaction logic or application effect of the corresponding effect.

For example, some particular effects may require that corresponding image content be included in the target content 140. For example, a "finger lightning effect" may require that a particular finger style be included in a picture or video to be applied, or require a user to make a particular finger style in a live video stream.

Therefore, a user may not successfully trigger a corresponding effect after a specific effect control is selected, thereby greatly affecting the experience of the user using the effect.

The embodiments of the present disclosure provide a solution for effect interaction. According to the solution, an electronic device may display an effect interaction interface, wherein the effect interaction interface comprises a control area and a content area. The control area comprises a group of effect controls, and the group of effect controls is configured to display first visual information of a corresponding effect. The content area is configured to provide a preview of applying an effect to a target content.

Further, the electronic device may receive a first predetermined operation for a target control in the group of effect controls, and correspondingly switch the target control to display second visual information of a target effect corresponding to the target control, where the second visual information comprises dynamic visual information for indicating an operation specification and/or an effect preview of the target effect.

Based on this manner, the embodiments of the present disclosure can use the effect control to display dynamic visual information (for example, a video or a dynamic image) for the target effect, so that a user can know the effect or the trigger condition of the target effect more conveniently, and the user can more efficiently select the desired effect and more easily use the effect for the desired content.

Various example implementations of this solution are described in detail below in combination with the accompanying drawings.

### Example Effect Interaction

### Example One

Reference is first made to FIG. 2A to FIG. 2C, which schematically illustrate a process of interacting with an effect interaction interface according to some embodiments of the present disclosure. As shown in FIG. 2A, an electronic device 210 may provide an effect interaction interface 200.

For example, the electronic device 210 may be an intelligent terminal (for example, a smart phone). It should be understood that although the electronic device 210 in FIG. 2A to FIG. 2C is shown as a smart phone, it may also be any other suitable device, including but not limited to: a tablet computer, a notebook computer, a desktop computer, a personal digital assistant, a smart wearable device, a vehicle-mounted device, or the like.

In addition, the effect interaction interface 200 may be, for example, provided by an application (for example, a multimedia editing application or a live streaming application) loaded on the electronic device 210. Such an application can provide a function for the user to use a predetermined effect for the target content, and such target content may include, for example, an existing picture file, a video file, or a real-time video stream.

For example, as shown in FIG. 2A, the effect interaction interface 200 may include a content area 220 and a control area 230. Similarly, the control area 230 may, for example, display a group of selectable effect controls, and the content area 220 may provide a preview of applying the selected effect to a target content 270.

As shown in FIG. 2A, the group of effect controls displayed by the control area 230 may include a recommendation control 240 and a regular control 250. As shown in FIG. 2A, the recommendation control 240 may, for example, have a larger display size than the regular control 250.

In some embodiments, the recommendation control 240 may correspond to a hot effect, for example, an effect with the highest usage count or the highest attention in a specific region. Alternatively, the hot effect may also correspond to an effect that the current user is more interested in or is more likely to use. It should be understood that the information on which such a hot effect recommendation is based is obtained with the knowledge and consent of the user.

In some embodiments, the recommendation control 240 may display different information than the regular control 250. For example, the regular control 250 may only display static image information of the corresponding effect, for example, an icon. In contrast, the recommendation control 240 may display visual information 260, which may include not only static image information (for example, an icon) of a recommendation effect, but also text information.

Such text information may be used, for example, to indicate an identifier of a recommendation effect, for example, a name of a recommendation effect. Alternatively, or in addition, the text information may further indicate an effect description of a recommendation effect, for example, using text to describe an effect after an effect is applied. Alternatively, or in addition, the text information may also be configured to indicate an operation specification of the recommendation effect, for example, using text to describe a condition under which the effect is triggered.

With continued reference to FIG. 2B, the electronic device 210 may, for example, receive a predetermined operation (hereinafter referred to as a first predetermined operation) of a user for the recommendation control 240. For example, the electronic device 210 may receive an appropriate interaction operation such as a single-click selection, a hovering selection, or a sliding selection for the recommendation control 240 by the user. Accordingly, as shown in FIG. 2B, the electronic device 210 may display, for example, an indication that the recommendation control 240 is selected in the interface 200.

Further, as shown in FIG. 2B, after a predetermined duration since receiving the predetermined operation for the recommendation control 240, the electronic device 210 may switch the recommendation control 240 to the dynamic visual information 280 for displaying the recommendation effect.

In some embodiments, such dynamic visual information 280 may include, for example, a video or a dynamic image for indicating an operation specification of the recommendation effect (for example, a condition under which the effect is triggered) and/or an effect preview (for example, an effect after an effect is triggered).

In this way, a user may more intuitively understand the richer information of the currently selected effect, and can more easily trigger the corresponding effect, thereby reducing the learning cost of the effect interaction.

In some embodiments, after receiving the first predetermined operation for the recommendation control 240, the electronic device 210 may automatically apply the recommendation effect to the target content 270.

In some embodiments, the first predetermined operation may be only used to trigger the display of the dynamic visual information 280, and after receiving an additional second predetermined operation, the electronic device 210 applies the corresponding recommendation effect to the target content. Such a second predetermined operation may include, for example, a click operation, a double-click operation, a long-press operation, a sliding operation, or other appropriate operations for the target control.

For example, a user may trigger the display of the dynamic visual information 280 by a hovering operation, and upon determining that the current effect is a desired effect, the user may trigger the recommendation effect to be applied to the target content 270 by clicking on the recommendation control 240.

In some embodiments, the electronic device 210 may utilize the recommendation control 240 to repeatedly display the dynamic visual information 280. Alternatively, the electronic device 210 may further switch back to display the visual information 260 after the dynamic visual information 280 is played, and repeatedly switch between the visual information 260 and the dynamic visual information 280.

In some embodiments, the electronic device 210 may further stop the selected recommendation control from being displayed in the effect interaction interface in response to a predetermined operation. For example, the electronic device 210 may receive an operation of a user hide the control area 230, or the electronic device 210 may receive a sliding operation of a user in the control area 230, which may cause the selected recommendation control 240 to not be displayed in the effect interaction interface 200.

Additionally, the electronic device 210 may further receive an additional predetermined operation, so that the selected recommendation control is re-displayed. In this case, the electronic device 210 may first display the visual information 260 associated with the recommendation control 240, and switch again to display the dynamic visual information 280 after the predetermined duration.

In some embodiments, for the recommendation control 240, it may be displayed, for example, in a predetermined location of the control area 230, such as a top-left corner, a bottom-left corner, a top-right corner, or a bottom-right corner. Such a predetermined location may be determined based on a usage habit of the current user, or an interaction habit for the predetermined region. For example, for a user with a right-handed interaction habit, it may always be displayed in the top-left corner. In contrast, for a user with a left-handed interaction habit, it may always be displayed in the top-right corner.

In some embodiments, the control area 230 may display a group of new effect controls in response to a predetermined operation (for example, a sliding operation). Correspondingly, when a group of new effect controls are displayed, the electronic device 210 may, for example, display another recommendation control different from the initial recommendation control, so that the user may always obtain the effect recommended by the system during the sliding process.

### Example Two

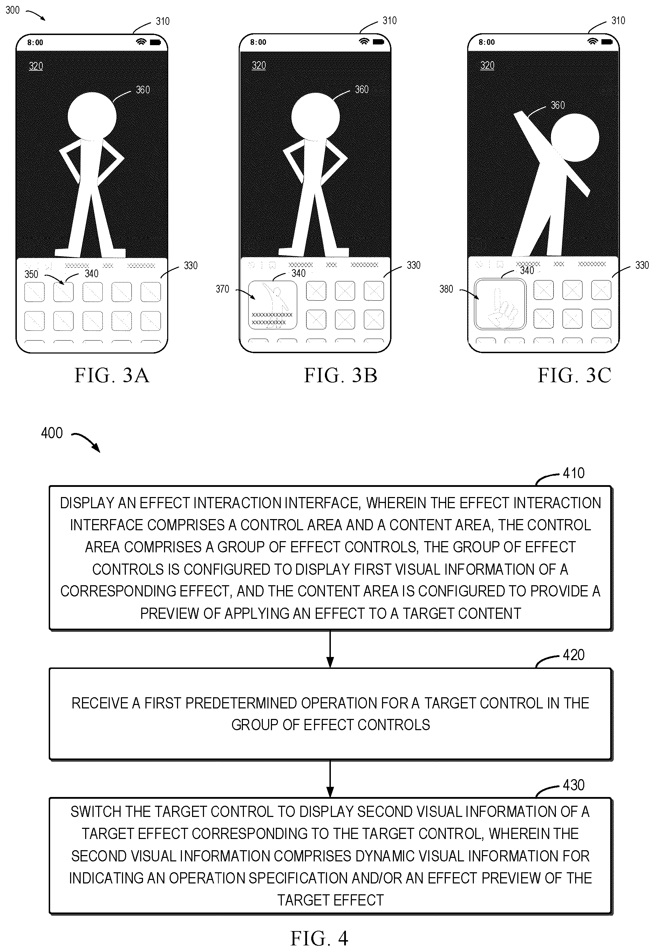

Reference will be made to FIG. 3A to FIG. 3C, which schematically illustrate a process of interacting with an effect interaction interface according to some other embodiments of the present disclosure. As shown in FIG. 3A, an electronic device 310 may provide an effect interaction interface 300.

For example, the electronic device 310 may be an intelligent terminal (for example, a smartphone). It should be understood that although the electronic device 310 in FIG. 3A to FIG. 3C is shown as a smartphone, it may also be any other suitable device, including but not limited to: a tablet computer, a notebook computer, a desktop computer, a personal digital assistant, a smart wearable device, a vehicle-mounted device, or the like.

In addition, the effect interaction interface 300 may be, for example, provided by an application (for example, a multimedia editing application or a live streaming application) loaded on the electronic device 310. Such an application can provide a function for a user to use a predetermined effect for the target content, and such target content may include, for example, an existing picture file, a video file, or a real-time video stream.

For example, as shown in FIG. 3A, the effect interaction interface 300 may include a content area 320 and a control area 330. Similarly, the control area 330 may, for example, display a group of selectable effect controls, and the content area 320 may provide a preview of applying the selected particular effect to a target content 360.

As shown in FIG. 3A, the control area 330 may display a group of effect controls 340. In an initial state, the group of effect controls 340 may, for example, have the same display size and may be configured to display visual information 350 of a corresponding effect. Such visual information 350 may include, for example, static image information of a corresponding effect, for example, an icon.

Further, as shown in FIG. 3B, the electronic device 310 may receive a predetermined operation for the effect control 340 (also referred to as the target control 340), and correspondingly switch the target control 340 to the state shown in FIG. 3B. Such a predetermined operation may include, for example, an appropriate interaction operation such as a single-click selection, a hovering selection, or a sliding selection of the target control 340 by the user.

As shown in FIG. 3B, the electronic device 310 may adjust the target control 340 from an initial first size to a larger second size in response to the predetermined operation, where the second size is larger than the first size. Thus, the target control 340 may have a larger display area to provide richer information.

In some embodiments, the electronic device 310 may further move the target control 340 with the second size to a predetermined location (for example, a top-left corner, a bottom-left corner, a top-right corner, or a bottom-right corner) in the effect interaction interface 300, regardless of whether the target control 340 is initially located at the location. Such a predetermined location may be determined based on a usage habit of the current user or an interaction habit for the predetermined region. For example, for a user with a right-handed interaction habit, it may always be displayed in the top-left corner. In contrast, for a user with a left-handed interaction habit, it may always be displayed in the top-right corner.

It should be understood that after the display size and/or the display location of the target control 340 changes in response to a predetermined operation, a display location of other control in the control area 330 may be correspondingly adjusted.

In some embodiments, the target control 340 with the second size may further display visual information 370, for example. Compared with the initial visual information 350, the visual information 370 may further include text information. Such text information, for example, may be configured to indicate an identifier of a target effect corresponding to the selected target control, for example, a name of the target effect. Alternatively, or in addition, the text information may further indicate an effect description of the target effect, for example, using text to indicate an effect after a target effect is applied. Alternatively, or in addition, the text information may further be used to indicate an operation specification of the target effect, for example, using text to describe a condition under which the target effect is triggered.

Further, after displaying the visual information 370 for a predetermined duration, or after a predetermined duration since receiving the predetermined operation for the target control 340, the electronic device 310 may switch the target control 340 with the second size to display dynamic visual information 380.

In some embodiments, such dynamic visual information 380 may include, for example, a video or a dynamic image for indicating an operation specification of the target effect (for example, a condition under which the effect is triggered) and/or an effect preview (for example, an effect after the effect is triggered).

In this way, the user can more intuitively understand the richer information of the currently selected effect, and can more easily trigger the corresponding effect, thereby reducing the learning cost of the effect interaction.

In some embodiments, after receiving a predetermined operation for a target control with the first size (also referred to as a first predetermined operation) for the target control 340, the electronic device 310 may automatically apply the target effect to the target content 360.

In some embodiments, the first predetermined operation may be used only to trigger the display of the dynamic visual information 380, and after receiving an additional second predetermined operation, the electronic device 310 applies the corresponding target effect to the target content 360. Such a second predetermined operation may include, for example, a click operation, a double-click operation, a long-press operation, a slide operation, or other suitable operations for the target control 340 with the second size.

For example, a user may trigger the target control 340 to switch from the first size to the second size by a clicking operation, and display the dynamic visual information 380, and after determining that the currently selected effect is the desired effect, the user may trigger the target effect to be applied to the target content 360 by double-clicking the target control 340 with the second size.

In some embodiments, the electronic device 310 may repeatedly display the dynamic visual information 380 with the target control 340. Alternatively, the electronic device 310 may also switch back to display the visual information 370 after the completion of playing of the dynamic visual information 380, and repeatedly switch between the visual information 370 and the dynamic visual information 380.

In some embodiments, the electronic device 310 may further stop the selected target control from being displayed in the effect interaction interface in response to a predetermined operation. For example, the electronic device 310 may receive an operation of a user hiding the control area 330, or the electronic device 310 may receive a sliding operation of the user in the control area 330, which may cause the selected target control 340 to not be displayed in the effect interaction interface 300.

Additionally, the electronic device 310 may further receive an additional predetermined operation, so that the selected target control is re-displayed. In this case, the electronic device 310 may continue to display the target control 340 at the second size, and first display the visual information 370 associated with the target control 340, and after the predetermined duration, switch again to display the dynamic visual information 380.

Based on the above process, the embodiments of the present disclosure can help users more conveniently know the relevant information of respective effects, thereby reducing the learning cost of effect usage and improving the efficiency of effect interaction.

### Example Processes

FIG. 4 illustrates a flowchart of an example process 400 of effect interaction in accordance with some embodiments of the present disclosure. The process 400 may be implemented independently of, or implemented by, an electronic device (for example, the electronic device 210 shown in FIGS. 2A-2C, or the electronic device 310 shown in FIGS. 3A-3C) discussed above.

As shown in FIG. 4, at block 410, the electronic device displays an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content.

At block 420, the electronic device receives a first predetermined operation for a target control in the group of effect controls.

At block 430, the electronic device switches the target control to display second visual information of a target effect corresponding to the target control, wherein the second visual information comprises dynamic visual information for indicating an operation specification and/or an effect preview of the target effect.

In some embodiments, switching the target control to display the dynamic visual information of the target effect corresponding to the target control comprises: after a predetermined duration since receiving the first predetermined operation, switching the target control to display the dynamic visual information of the target effect.

In some embodiments, the target control is configured to display the first visual information of the target effect in a first size, and switching the target control to display the dynamic visual information of the target effect corresponding to the target control comprises: adjusting the target control from the first size to a second size, the second size being greater than the first size; and displaying the dynamic visual information of the target effect using the target control with the second size.

In some embodiments, the method further comprises: displaying the target control with the second size at a predetermined location in the effect interaction interface, wherein the predetermined location is different from an initial location of the target control in a state with the first size.

In some embodiments, the second visual information comprises a video or a dynamic image.

In some embodiments, the target control is a recommendation control in the group of effect controls, and displaying the effect interaction interface comprises: displaying the recommendation control with a larger display size than other controls in the group of effect controls.

In some embodiments, the recommendation control comprises an effect control corresponding to a hot effect in a predetermined region.

In some embodiments, first visual information of the recommendation control comprises image information and text information, and first visual information of the other controls in the group of effect controls does not comprise text information.

In some embodiments, the text information of the recommendation control is configured to indicate at least one of: an identifier of a corresponding recommendation effect, an effect description of the recommendation effect, and an operation specification of the recommendation effect.

In some embodiments, the recommendation control is a first recommendation control, and displaying the effect interaction interface comprises: displaying a first group of effect controls in the effect interaction interface, wherein the first group of effect controls comprises the first recommendation control, and in response to a third predetermined operation for the effect interaction interface, displaying a second group of effect controls in the effect interaction interface, wherein the second group of controls comprises a second recommendation control, and the second recommendation control is different from the first recommendation control.

In some embodiments, the method further comprises: in response to the first predetermined operation for the target control, displaying, in the content area, a preview of applying the target effect to the target content; or in response to a second predetermined operation for the target control, displaying, in the content area, a preview of applying the target effect to the target content.

In some embodiments, the first predetermined operation comprises a click operation and/or a hover operation for the target control, and the second predetermined operation comprises a click operation, a double-click operation, and/or a long-press operation for the target control.

In some embodiments, switching the target control to display the second visual information of the target effect corresponding to the target control comprises: playing the second visual information repeatedly using the target control.

In some embodiments, the method further comprises: in response to the completion of playing of the second visual information, playing the first visual information and the second visual information repeatedly using the target control.

In some embodiments, the method further comprises: in response to receiving a fourth predetermined operation, stopping the target control from being displayed in the effect interaction interface; and in response to receiving a fifth predetermined operation, redisplaying the target control in the effect interaction interface, wherein redisplaying the target control in the effect interaction interface comprises: displaying the first visual information using the target control, and after a predetermined duration, switching the target control to display the second visual information.

In some embodiments, the target content comprises: an image file, a video file, or a live video stream.

### Example Apparatus and Device

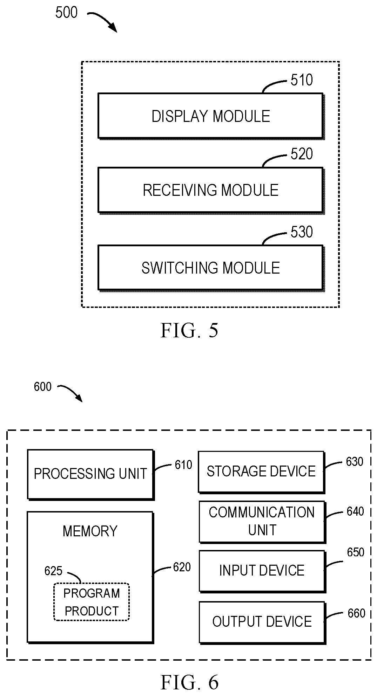

Embodiments of the present disclosure further provide a corresponding apparatus for implementing the above method or process. FIG. 5 illustrates a schematic structural block diagram of an apparatus 500 for effect interaction according to some embodiments of the present disclosure.

As shown in FIG. 5, the apparatus 500 includes a display module 510 configured to display an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content.

Further, the apparatus 500 further comprises a receiving module 520 configured to receive a first predetermined operation for a target control in the group of effect controls.

The apparatus 500 further comprises a switching module 530 configured to switch the target control to display second visual information of a target effect corresponding to the target control, wherein the second visual information comprises dynamic visual information for indicating an operation specification and/or an effect preview of the target effect.

In some embodiments, the switching module 530 is further configured to, after a predetermined duration since receiving the first predetermined operation, switch the target control to display the dynamic visual information of the target effect.

In some embodiments, the target control is configured to display the first visual information of the target effect in a first size, and the switching module 530 is further configured to adjust the target control from the first size to a second size, the second size being greater than the first size; and display the dynamic visual information of the target effect using the target control with the second size.

In some embodiments, the switching module 530 is configured to display the target control with the second size at a predetermined location in the effect interaction interface, wherein the predetermined location is different from an initial location of the target control in a state with the first size.

In some embodiments, the second visual information comprises a video or a dynamic image.

In some embodiments, the target control is a recommendation control in the group of effect controls, and the display module 510 is further configured to display the recommendation control with a larger display size than other controls in the group of effect controls.

In some embodiments, the recommendation control comprises an effect control corresponding to a hot effect in a predetermined region.

In some embodiments, first visual information of the recommendation control comprises image information and text information, and first visual information of the other controls in the group of effect controls does not comprise text information.

In some embodiments, the text information of the recommendation control is configured to indicate at least one of: an identifier of a corresponding recommendation effect, an effect description of the recommendation effect, and an operation specification of the recommendation effect.

In some embodiments, the recommendation control is a first recommendation control, and the display module 510 is further configured to display a first group of effect controls in the effect interaction interface, wherein the first group of effect controls comprises the first recommendation control; and in response to a third predetermined operation for the effect interaction interface, displaying a second group of effect controls in the effect interaction interface, wherein the second group of controls comprises a second recommendation control, and the second recommendation control is different from the first recommendation control.

In some embodiments, the switching module is configured to, in response to the first predetermined operation for the target control, display, in the content area, a preview of applying the target effect to the target content; or in response to a second predetermined operation for the target control, display, in the content area, a preview of applying the target effect to the target content.

In some embodiments, the first predetermined operation comprises a click operation and/or a hover operation for the target control, and the second predetermined operation comprises a click operation, a double-click operation, and/or a long-press operation for the target control.

In some embodiments, the switching module 530 is further configured to play the second visual information repeatedly using the target control.

In some embodiments, the switching module 530 is further configured to, in response to the completion of playing of the second visual information, play the first visual information and the second visual information repeatedly using the target control.

In some embodiments, the switching module 530 is further configured to, in response to receiving a fourth predetermined operation, stop the target control from being displayed in the effect interaction interface; and in response to receiving a fifth predetermined operation, redisplay the target control in the effect interaction interface, wherein the switching module 530 is further configured to display the first visual information using the target control, and after a predetermined duration, switch the target control to display the second visual information.

In some embodiments, the target content comprises: an image file, a video file, or a live video stream.

The units included in the apparatus 500 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the units in the apparatus 500 may be implemented, at least in part, by one or more hardware logic components. By way of example and not limitation, example types of hardware logic components that may be used include field programmable gate array (FPGA), application specific integrated circuit (ASIC), application specific standard (ASSP), system-on-a-chip (SOC), complex programmable logic devices (CPLD), and the like.

FIG. 6 illustrates a block diagram of a computing device/server 600 in which one or more embodiments of the present disclosure may be implemented. It should be understood that the computing device/server 600 illustrated in FIG. 6 is merely exemplary and should not constitute any limitation on the functionality and scope of the embodiments described herein.

As shown in FIG. 6, the computing device/server 600 is in the form of a general-purpose computing device. Components of the computing device/server 600 may include, but are not limited to, one or more processors or processing units 610, a memory 620, a storage device 630, one or more communication units 640, one or more input devices 660, and one or more output devices 660. The processing unit 610 may be an actual or virtual processor and capable of performing various processes according to programs stored in the memory 620. In multiprocessor systems, multiple processing units execute computer-executable instructions in parallel to improve the parallel processing capability of the computing device/server 600.

The computing device/server 600 typically includes a plurality of computer storage medium. Such medium may be any available medium accessible by the computing device/server 600, including, but not limited to, volatile and non-volatile medium, removable and non-removable medium. The memory 620 may be volatile memory (for example, registers, caches, random access memory (RAM)), non-volatile memory (for example, read-only memory (ROM), electrically erasable programmable read-only memory (EEPROM), flash memory), or some combination thereof. The storage device 630 may be a removable or non-removable medium and may include a machine-readable medium, such as a flash drive, a magnetic disk, or any other medium, which may be capable of storing information and/or data (for example, training data for training) and may be accessed within the computing device/server 600.

The computing device/server 600 may further include additional removable/non-removable, volatile/non-volatile storage medium. Although not shown in FIG. 6, a disk drive for reading or writing from a removable, non-volatile magnetic disk (for example, a "floppy disk") and an optical disk drive for reading or writing from a removable, non-volatile optical disk may be provided. In these cases, each drive may be connected to a bus (not shown) by one or more data medium interfaces. The memory 620 may include a computer program product 625 having one or more program modules configured to perform various methods or actions of various embodiments of the present disclosure.

The communications unit 640 implements communications with other computing devices over a communications medium. Additionally, the functionality of components of the computing device/server 600 may be implemented in a single computing cluster or multiple computing machines capable of communicating over a communication connection. Thus, the computing device/server 600 may operate in a networked environment using logical connections with one or more other servers, network personal computers (PCs), or another network node.

An input device 650 may be one or more input devices such as a mouse, a keyboard, a trackball, or the like. The output device 660 may be one or more output devices, such as a display, a speaker, a printer, or the like. The computing device/server 600 may also communicate with one or more external devices (not shown) as needed, external devices such as storage devices, display devices, or the like, communicate with one or more devices that enable a user to interact with the computing device/server 600, or communicate with any device (for example, network card, modem, or the like) that enables the computing device/server 600 to communicate with one or more other computing devices. Such communication may be performed via an input/output (I/O) interface (not shown).

According to example implementations of the present disclosure, there is provided a computer-readable storage medium having one or more computer instructions stored thereon, wherein the one or more computer instructions are executed by a processor to implement the method described above.

Aspects of the present disclosure are described herein with reference to the flowchart and/or the block diagram of the method, the apparatus (system), and the computer program product implemented in accordance with the present disclosure. It should be understood that each block of the flowchart and/or block diagram, and combinations of blocks in the flowchart and/or block diagram, may be implemented by computer-readable program instructions.

These computer-readable program instructions may be provided to a processing unit of a general-purpose computer, special-purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram.

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the one or more blocks in the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the implementations disclosed herein.

## Claims

1. A method of effect interaction, comprising:
displaying an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content;
receiving a first predetermined operation for a target control in the group of effect controls; and
switching the target control to display second visual information of a target effect corresponding to the target control, wherein the second visual information comprises dynamic visual information for indicating an operation specification and/or an effect preview of the target effect.

2. The method of claim 1, wherein switching the target control to display the dynamic visual information of the target effect corresponding to the target control comprises:
after a predetermined duration since receiving the first predetermined operation, switching the target control to display the dynamic visual information of the target effect.

3. The method of claim 1, wherein the target control is configured to display the first visual information of the target effect in a first size, and switching the target control to display the dynamic visual information of the target effect corresponding to the target control comprises:
adjusting the target control from the first size to a second size, the second size being greater than the first size; and
displaying the dynamic visual information of the target effect using the target control with the second size.

4. The method of claim 3, further comprising:
displaying the target control with the second size at a predetermined location in the effect interaction interface, wherein the predetermined location is different from an initial location of the target control in a state with the first size.

5. The method of any of claims 1 to 4, wherein the second visual information comprises a video or a dynamic image.

6. The method of claim 1, wherein the target control is a recommendation control in the group of effect controls, and displaying the effect interaction interface comprises:
displaying the recommendation control with a larger display size than other controls in the group of effect controls.

7. The method of claim 6, wherein the recommendation control comprises an effect control corresponding to a hot effect in a predetermined region.

8. The method of claim 6, wherein first visual information of the recommendation control comprises image information and text information, and first visual information of the other controls in the group of effect controls does not comprise text information.

9. The method of claim 8, wherein the text information of the recommendation control is configured to indicate at least one of: an identifier of a corresponding recommendation effect, an effect description of the recommendation effect, and an operation specification of the recommendation effect.

10. The method of any of claims 6 to 9, wherein the recommendation control is a first recommendation control, and displaying the effect interaction interface comprises:
displaying a first group of effect controls in the effect interaction interface, wherein the first group of effect controls comprises the first recommendation control, and
in response to a third predetermined operation for the effect interaction interface, displaying a second group of effect controls in the effect interaction interface, wherein the second group of controls comprises a second recommendation control, and the second recommendation control is different from the first recommendation control.

11. The method of claim 1, further comprising:
in response to the first predetermined operation for the target control, displaying, in the content area, a preview of applying the target effect to the target content; or
in response to a second predetermined operation for the target control, displaying, in the content area, a preview of applying the target effect to the target content.

12. The method of claim 11, wherein the first predetermined operation comprises a click operation and/or a hover operation for the target control, and the second predetermined operation comprises a click operation, a double-click operation, and/or a long-press operation for the target control.

13. The method of claim 1, wherein switching the target control to display the second visual information of the target effect corresponding to the target control comprises:
playing the second visual information repeatedly using the target control.

14. The method of claim 1, further comprising:
in response to the completion of playing of the second visual information, playing the first visual information and the second visual information repeatedly using the target control.

15. The method of claim 1, further comprising:
in response to receiving a fourth predetermined operation, stopping the target control from being displayed in the effect interaction interface; and
in response to receiving a fifth predetermined operation, redisplaying the target control in the effect interaction interface,
wherein redisplaying the target control in the effect interaction interface comprises:
displaying the first visual information using the target control, and
after a predetermined duration, switching the target control to display the second visual information.

16. The method of claim 1, wherein the target content comprises: an image file, a video file, or a live video stream.

17. An apparatus for effect interaction comprises:
a display module configured to display an effect interaction interface, wherein the effect interaction interface comprises a control area and a content area, the control area comprises a group of effect controls, the group of effect controls is configured to display first visual information of a corresponding effect, and the content area is configured to provide a preview of applying an effect to a target content;
a receiving module configured to receive a first predetermined operation for a target control in the group of effect controls; and
a switching module configured to switch the target control to display second visual information of a target effect corresponding to the target control, wherein the second visual information comprises dynamic visual information for indicating an operation specification and/or an effect preview of the target effect.

18. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 16.

19. A computer-readable storage medium having stored thereon a computer program, which when executed by a processor, performs the method of any of claims 1 to 16.
